# EUROPEAN PATENT APPLICATION

(11) **EP 1 005 840 A2**
(43) Date of publication of application: **07.06.2000**
(21) Application number: 99123495.6
(22) Date of filing: 25.11.1999
(51) Int. Cl.: A61C 8/00

(54) **Yellow dental implants**

(30) Priority: 03.12.1998 IT MI980785
(71) Applicant: Vrespa, Giuseppe, I-20025 Legnano (Milan) (IT)
(72) Inventor: Vrespa, Giuseppe, I-20025 Legnano (Milan) (IT)
(74) Representative: Ripamonti, Enrico, Dr. Ing.

(57) **Abstract**

In the dental implant, of titanium or its alloys, the implant surface, or at least that part thereof which could be visible when the implant and relative prosthesis have been applied, is coated with a layer of titanium nitride of yellow-gold colour. The titanium nitride coating can be applied by the PVC (physical vapour deposition) method.

## Description

This invention relates to dental implants.

As is well known to the expert of the art, dental implants are currently formed from pure titanium or titanium alloy, the relative surface consisting mainly of titanium dioxide the colour of which is light grey if the surface of the implant is dry, and dark grey if wet.

Such colour can result in poor appearance, as the grey colour may be visible through the mouth to a greater or lesser extent, between the gum and the actual prosthesis.

The object of the invention is therefore to provide a dental implant the colour of which does not so conspicuously contrast with the colour of the gum, as is the case with current implants.

This object is attained by the dental implant of the invention, characterised in that the implant surface, or at least that part thereof which could be visible when the implant and relative prosthesis have been applied, is coated with a layer of titanium nitride of yellow-gold colour. It is apparent that such a coloration does not contrast with the colour of the gum and teeth, or at least the contrast is decidedly less than that of the grey colour of current implants.

Preferably, said titanium nitride coating is applied to the implant surface by the known PVC (physical vapour deposition) method, which is a type of ionic plating.

## Claims

1. A dental implant of titanium or its alloys, characterised in that the implant surface, or at least that part thereof which could be visible when the implant and relative prosthesis have been applied, is coated with a layer of titanium nitride.

2. An implant as claimed in claim 1, wherein the titanium nitride coating is applied to the implant surface by the PVC (physical vapour deposition) method.
